# EUROPEAN PATENT SPECIFICATION

(11) **EP 3 453 206 B1**
(45) Date of publication and mention of the grant of the patent: **02.10.2019**
(21) Application number: 16725950.6
(22) Date of filing: 03.05.2016
(51) Int. Cl.: H04W 48/06

(54) **NETWORK NODES AND TERMINAL DEVICES, AND METHODS OF OPERATING THE SAME**
NETZWERKKNOTEN UND ENDGERÄTEVORRICHTUNGEN SOWIE VERFAHREN ZUM BETRIEB DAVON
NOEUDS DE RÉSEAU ET DISPOSITIFS TERMINAUX ET LEURS PROCÉDÉS DE FONCTIONNEMENT

(43) Date of publication of application: 13.03.2019
(73) Proprietor: Telefonaktiebolaget LM Ericsson (PUBL), 164 83 Stockholm (SE)
(72) Inventor: DA SILVA, Icaro L. J., 170 77 Solna (SE); MILDH, Gunnar, 192 55 Sollentuna (SE); PRADAS, Jose Luis, 118 27 Stockholm (SE); RUNE, Johan, 181 29 Lidingö (SE)
(74) Representative: Ericsson
(86) International application number: PCT/SE2016/050394
(87) International publication number: WO 2017/192074

(56) References cited:
- US-A1- 2014 295 836
- US-A1- 2015 256 995
- FRENGER PAL ET AL: "A clean slate radio network designed for maximum energy performance", 2014 IEEE 25TH ANNUAL INTERNATIONAL SYMPOSIUM ON PERSONAL, INDOOR, AND MOBILE RADIO COMMUNICATION (PIMRC), IEEE, 2 September 2014 (2014-09-02), pages 1300-1304, XP032789827, DOI: 10.1109/PIMRC.2014.7136369 [retrieved on 2015-06-25] cited in the application
- "3rd Generation Partnership Project; Technical Specification Group Radio Access Network; Evolved Universal Terrestrial Radio Access (E-UTRA); Radio Resource Control (RRC); Protocol specification (Release 12)", 3GPP STANDARD; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V12.7.0, 24 September 2015 (2015-09-24), pages 1-453, XP050996305, [retrieved on 2015-09-24]
- Dr Pål Frenger ET AL: ""From always available to always optimized" Towards 5G - 5GrEEn system design", , 27 August 2014 (2014-08-27), XP055186153, Retrieved from the Internet: URL:http://wireless.kth.se/5green/wp-conte nt/uploads/sites/19/2014/08/2014-08-27-Pål -Frenger-5green-summer-school-Part-2-From- always-available-to-always-optimized-final .pdf [retrieved on 2015-04-28]

## Description

### Technical Field

The disclosure relates to network nodes for use in a communication network and terminal devices, and methods of operating the same.

### Background

Energy efficiency is currently high on the agenda in the telecoms industry, particularly in relation to the development of the next generation of communication standards (e.g. the so-called '5G' or 5^{th} generation wireless systems). It has been realised that the major part of the energy consumed by a communication network (for example operating according to the existing Long Term Evolution (LTE) standards) is caused by continuously repeated transmissions in idle or lightly loaded cells. Thus, one way to reduce the consumed energy is to reduce the amount of information that is broadcast by the network. To this end, a concept called System Control Plane (SCP) has been proposed. This concept is described in the paper "A Clean Slate Radio Network Designed for Maximum Energy Performance" by Frenger et al., 2014 IEEE 25th Annual International Symposium on Personal, Indoor, and Mobile Radio Communication (PIMRC), pages 1300-1304. In this concept the essential System Information (SI), which could generally be equivalent to some or all of the information contained in the Master Information Block (MIB), System Information Block 1 (SIB1) and System Information Block 2 (SIB2) in LTE, is not broadcast in the same way as in LTE, where the information is explicitly broadcasted. Instead, the SCP concept has two main features:
i) the infrequent transmission (e.g. at 10 second intervals) of all possible configurations of essential System Information (such as any of the SI currently contained in MIB, SIB1 and SIB2 in LTE). All (possible or plausible) parameter value combinations or configurations that are used in a public land mobile network (PLMN) or a region of a PLMN, can be stored in a table or database, which is referred to in the SCP concept and herein as an Access Information Table (AIT), and some form of index mapping can be used to provide each configuration (i.e. each parameter value combination) with a respective index value. In the SCP concept, these indexes are effectively just pointers, and are referred to in the SCP concept and herein as System Signature Indexes (SSI), and each of them points to an entry in the Access Information Table (AIT), wherein each entry in the AIT contains one configuration of system information essential for a terminal device or user equipment (UE) to access the system/network.
ii) the frequent transmission or broadcast of system signature indexes (SSIs), e.g. each 100 milliseconds (ms) within an area in which a given system information configuration is applied. This system signature can be similar to the primary synchronization signals (PSS) and secondary synchronization signals (SSS) used in LTE.

In addition, it may also be possible for less essential System Information, e.g. System Information that is not needed for an initial access to the network, to be unicast to a UE once the UE has accessed the network.

Thus, the SCP concept aims to reduce the amount of information broadcast by the network, assuming that most of the time the UE has access to stored copies of the possible configurations (i.e. the AIT), and the broadcast index (SSI) is only used to point to the correct configuration for a given area.

The system information transmitted for or stored in the AIT can comprise, for example, a list of PLMNs and various random access related configuration parameters. A portion of an AIT according to the SCP concept is shown below:

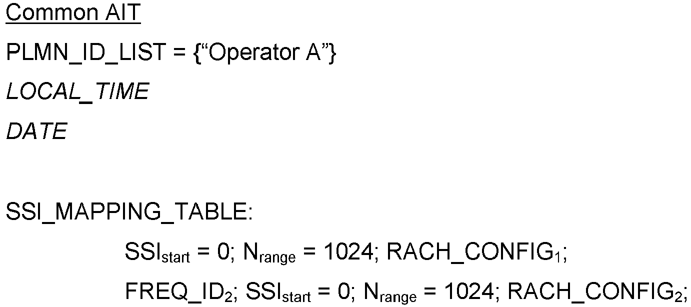

Load control is a useful feature in many communication systems, which facilitates efficient resource utilization. In cellular communication systems such as LTE, load control may be used in various parts of the network. On the cell level, the main way for controlling the load on the radio interface and on the resources in the eNB (the name for the radio access nodes in LTE) is the Access Class Barring (ACB) feature.

In the ACB feature, each UE is a member of at least one Access Class (AC), information about which is stored in the UE, for example in the Universal Subscriber Identity Module (USIM). An eNB may announce the ACB state in each cell through the broadcast system information (SI). For example System Information Block Type 2 (SIB 2) of the SI lists the state of each AC through an Access Class Barring Factor (ACBF) associated with each AC, and the ACBF has a value between 0 and 1. When a UE finds an AC in the SI which corresponds to the UE's AC (e.g. the one stored in the USIM), the UE generates a random value between 0 and 1, and if the random value is lower than the ACBF of the concerned AC, the UE considers the cell as barred, i.e. the UE is not allowed to access it, for a random time period with a mean value governed by an Access Class Barring Time (ACBT) parameter that is also included in the SI (in SIB 2). SIB 2, which contains the ACB information, is transmitted with a period of 80 ms or more.

### Summary

In considering how to implement load control in a communication network that makes use of the SCP concept (or any similar concept in which a number of possible parameter value configurations are stored in the UE and the network broadcasts an identifier or index for a particular parameter value configuration that is to be used), it has been realised when including ACB information in an AIT (or similar data structure), each possible combination of the parameters of ACB (i.e. each of the numerous possible ACB configurations) has to have its own record variant of every possible combination of the other parameter value configurations in the AIT. This will make the AIT excessively large and the number of SSIs to point to each individual AIT record will also be undesirably large, thereby not only increasing the length of the SSI, but also greatly increasing the processing effort required from the UE when it is trying to decode each of the possible SSIs.

Therefore, there is a need for a way to provide load control functionality in a network that does not frequently broadcast system information, and that combines flexibility and high granularity with low index and parameter value configuration overheads.

According to a first aspect, there is provided a method of operating a network node in a communication network, the method comprising initiating transmission, from a radio access node in the communication network, of a first signal comprising an index value; wherein, if load control is not being applied by the radio access node, the index value corresponds to a set of parameters required for a terminal device to access the communication network; and wherein, if load control is being applied by the radio access node, the index value indicates that load control information is to be transmitted from the radio access node.

According to a second aspect, there is provided a method of operating a terminal device, the method comprising receiving, from a radio access node in a communication network, a first signal comprising an index value; determining if load control information is to be transmitted from the radio access node based on the index value; and if it is determined that load control information is not to be transmitted from the radio access node, identifying a set of parameters required for the terminal device to access the communication network corresponding to the index value.

According to a third aspect, there is provided a network node for use in a communication network, wherein the network node is adapted configured to initiate transmission, from a radio access node in the communication network, of a first signal comprising an index value; wherein, if load control is not being applied by the radio access node, the index value corresponds to a set of parameters required for a terminal device to access the communication network; and wherein, if load control is being applied by the radio access node, the index value indicates that load control information is to be transmitted from the radio access node.

According to a fourth aspect, there is provided a terminal device, wherein the terminal device is adapted to receive, from a radio access node in a communication network, a first signal comprising an index value; and determine if load control information is to be transmitted from the radio access node based on the index value; identify a set of parameters required for the terminal device to access the communication network corresponding to the index value if it is determined that load control information is not to be transmitted from the radio access node.

According to a fifth aspect, there is provided a network node for use in a communication network, wherein the network node comprises a processor and a memory, said memory containing instructions executable by said processor, whereby said network node is operative to initiate transmission, from a radio access node in the communication network, of a first signal comprising an index value; wherein, if load control is not being applied by the radio access node, the index value corresponds to a set of parameters required for a terminal device to access the communication network; and wherein, if load control is being applied by the radio access node, the index value indicates that load control information is to be transmitted from the radio access node

According to a sixth aspect, there is provided a terminal device, wherein the terminal device comprises a processor and a memory, said memory containing instructions executable by said processor, whereby said terminal device is operative to receive, from a radio access node in a communication network, a first signal comprising an index value; and determine if load control information is to be transmitted from the radio access node based on the index value; identify a set of parameters required for the terminal device to access the communication network corresponding to the index value if it is determined that load control information is not to be transmitted from the radio access node

According to a seventh aspect, there is provided a network node for use in a communication network, the network node comprising a first initiating transmission module configured to initiate transmission, from a radio access node in the communication network, of a first signal comprising an index value; wherein, if load control is not being applied by the radio access node, the index value corresponds to a set of parameters required for a terminal device to access the communication network; and wherein, if load control is being applied by the radio access node, the index value indicates that load control information is to be transmitted from the radio access node.

According to an eighth aspect, there is provided a terminal device, the terminal device comprising a first receiving module configured to receive, from a radio access node in a communication network, a first signal comprising an index value; and a first determining module configured to determine if load control information is to be transmitted from the radio access node based on the index value; a first identifying module configured to identify a set of parameters required for the terminal device to access the communication network corresponding to the index value if it is determined that load control information is not to be transmitted from the radio access node.

According to a ninth aspect, there is provided a computer program product comprising a computer readable medium having computer readable code embodied therein, the computer readable code being configured such that, on execution by a suitable computer or processor, the computer or processor is caused to perform any of the methods described above.

### Brief Description of the Drawings

Exemplary embodiments of the techniques introduced in this document are described below with reference to the following figures, in which:
Figure 1 is an illustration of a communication network according to an embodiment;
Figure 2 is a block diagram of a network node according to an embodiment;
Figure 3 is a block diagram of a terminal device according to an embodiment;
Figure 4 is a flow chart illustrating a method of operating a network node according to an embodiment;
Figure 5 is a flow chart illustrating a method of operating a terminal device according to an embodiment;
Figure 6 is a flow chart illustrating a method of operating a network node according to another embodiment;
Figure 7 is an illustration of the timing of the transmission of first signals and subsequent signals according to an embodiment;
Figure 8 is a flow chart illustrating a method of operating a terminal device according to another embodiment;
Figure 9 is a block diagram of a network node according to another embodiment;
Figure 10 is a block diagram of a terminal device according to another embodiment;
Figure 11 is a block diagram of a network node according to yet another embodiment; and
Figure 12 is a block diagram of a terminal device according to yet another embodiment.

### Detailed Description

The following sets forth specific details, such as particular embodiments for purposes of explanation and not limitation. But it will be appreciated by one skilled in the art that other embodiments may be employed apart from these specific details. In some instances, detailed descriptions of well known methods, nodes, interfaces, circuits, and devices are omitted so as not obscure the description with unnecessary detail. Those skilled in the art will appreciate that the functions described may be implemented in one or more nodes using hardware circuitry (e.g., analog and/or discrete logic gates interconnected to perform a specialized function, ASICs, PLAs, etc.) and/or using software programs and data in conjunction with one or more digital microprocessors or general purpose computers. Nodes that communicate using the air interface also have suitable radio communications circuitry. Moreover, where appropriate the technology can additionally be considered to be embodied entirely within any form of computer-readable memory, such as solid-state memory, magnetic disk, or optical disk containing an appropriate set of computer instructions that would cause a processor to carry out the techniques described herein.

Hardware implementation may include or encompass, without limitation, digital signal processor (DSP) hardware, a reduced instruction set processor, hardware (e.g., digital or analog) circuitry including but not limited to application specific integrated circuit(s) (ASIC) and/or field programmable gate array(s) (FPGA(s)), and (where appropriate) state machines capable of performing such functions.

In terms of computer implementation, a computer is generally understood to comprise one or more processors, one or more processing units, one or more processing modules or one or more controllers, and the terms computer, processor, processing unit, processing module and controller may be employed interchangeably. When provided by a computer, processor, processing unit, processing module or controller, the functions may be provided by a single dedicated computer, processor, processing unit, processing module or controller, by a single shared computer, processor, processing unit, processing module or controller, or by a plurality of individual computers, processors, processing units, processing modules or controllers, some of which may be shared or distributed. Moreover, these terms also refer to other hardware capable of performing such functions and/or executing software, such as the example hardware recited above.

Although in the description below the term "terminal device" and "user equipment" or "UE" is used, it should be understood by the skilled in the art that these terms are non-limiting term and comprise or include any mobile or wireless device or node equipped with a radio interface allowing for at least one of: transmitting signals in uplink (UL) and receiving and/or measuring signals in downlink (DL). A UE herein may comprise a UE (in its general sense) capable of operating or at least performing measurements in one or more frequencies, carrier frequencies, component carriers or frequency bands. It may be a "UE" operating in single- or multi-radio access technology (RAT) or multi-standard mode. As well as "UE", the terms "mobile device" and "terminal device" may be used interchangeably in the following description, and it will be appreciated that such a device does not necessarily have to be 'mobile' in the sense that it is carried by a user. Instead, the terms "mobile device" and "terminal device" encompass any device that is capable of communicating with communication networks that operate according to one or more mobile communication standards, such as the Global System for Mobile communications, GSM, Universal Mobile Telecommunications System (UMTS), Wideband Code-Division Multiple Access (WCDMA), Long-Term Evolution (LTE), etc., or any future communication standard, e.g. a so-called Fifth Generation (5G) communication network.

A cell or radio coverage area is associated with a radio access node, where a radio access node comprises in a general sense any network node transmitting radio signals in the downlink and/or receiving radio signals in the uplink. Some example radio access nodes, or terms used for describing radio access nodes, are base station, radio network node, eNodeB, eNB, NodeB, macro/micro/pico/femto radio base station, home eNodeB (also known as femto base station), relay, repeater, sensor, transmitting-only radio nodes or receiving-only radio nodes. A radio access node may operate or at least perform measurements in one or more frequencies, carrier frequencies or frequency bands and may be capable of carrier aggregation. It may also be a single-radio access technology (RAT), multi-RAT, or multi-standard node, e.g., using the same or different base band modules for different RATs.

Unless otherwise indicated herein, the signalling described is either via direct links or logical links (e.g. via higher layer protocols and/or via one or more network nodes).

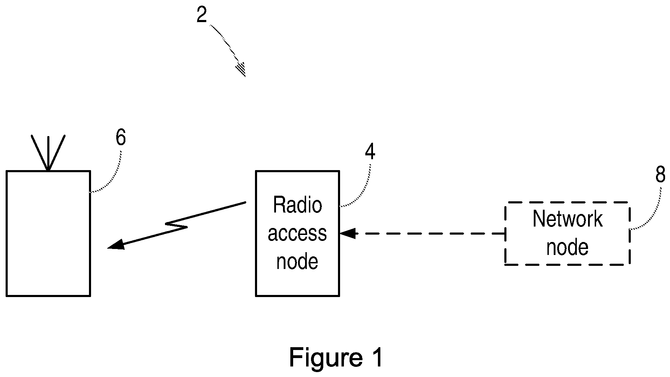

Figure 1 shows a communication network 2 according to an embodiment. The communication network 2 can be a network operating according to an existing communication standard, or a future, 5G, standard. The communication network comprises a radio access node 4 that provides a radio interface for one or more terminal devices 6. That is, the terminal device 6 can communicate with the radio access node 4, and vice versa, via an air interface.

The methods and techniques described herein can be implemented by a network node. In some embodiments, the functionality of the network node is implemented in or by the radio access node 4. However, in other embodiments, the functionality of the network node is implemented separately from the radio access node. In this case, a network node 8 is provided that is connected to the radio access node 4, and that provides suitable control signals to the radio access node 4 (and optionally receives signals from the radio access node 4). The network node 8 can be, or be implemented on, a server or computer that is located remotely from the radio access node 4, and for example the network node 8 can be considered to be located in the 'cloud' (e.g. the network node 8 is connected to the radio access node 4 via the Internet).

Although not shown in Figure 1, it will be appreciated that the communication network 2 can comprise one or more control nodes, for example located in a 'core' part of the network 2, that control the operation of the radio access node 4 (and/or the network node 8, if provided).

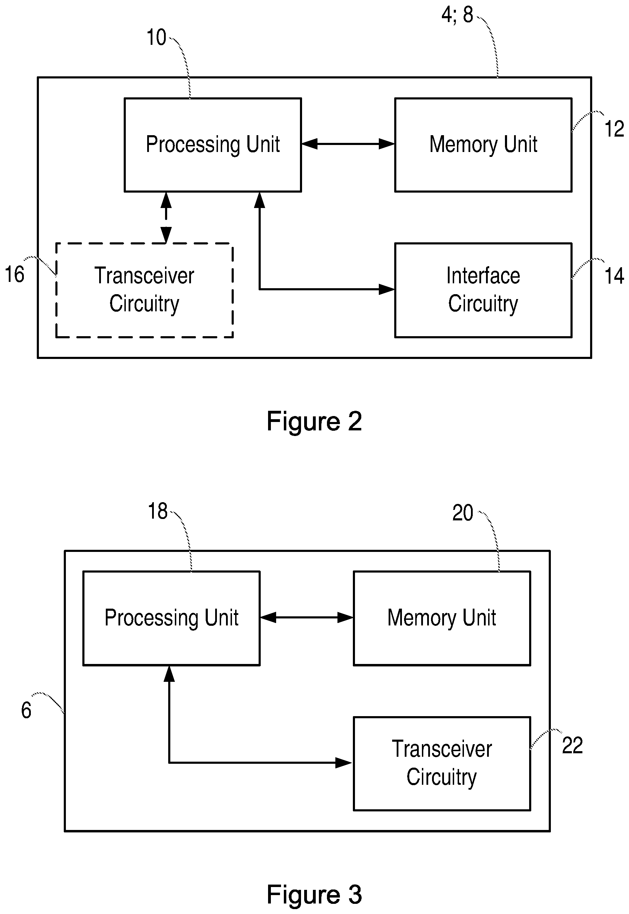

Figure 2 is a block diagram of a network node 8 according to an embodiment that can be adapted or configured to operate according to one or more of the non-limiting example embodiments described. As noted above, the network node can be a radio access node 40, such as an eNB, radio network node, base station, etc..

The network node 8 comprises a processor or processing unit 10 that controls the operation of the network node 8. In some embodiments, the processing unit 10 can comprise one or more modules for implementing individual processing steps of the techniques described herein. The processing unit 10 is connected to a memory or memory unit 12 that contains or stores instructions or computer code executable by the processing unit 10 and other information or data required for the operation of the network node 8.

The network node 8 also comprises interface circuitry 14 that is for enabling the network node 8 to communicate with other nodes in the network 2.

Where the network node 8 is a radio access node 4, the interface circuitry 14 can be for enabling the radio access node 4 to communicate with other radio access nodes 4 and/or nodes in a 'higher' part of the network 2 (e.g. in a core part of the network 2). This communication can comprise control signalling, information required for the operation of the radio access node 4 and/or data or other signalling for a terminal device 6.

Where the network node 8 is separate from the radio access node 4, the interface circuitry 14 can be for enabling the network node 8 to communicate with a radio access node 4 and/or to communicate with other network nodes 8 in the network 2.

Where the network node 8 is in the form of a radio access node 4, the network node 8 can comprise transceiver circuitry 16 (which comprises a receiver and a transmitter) with associated antenna(s) that can be used to transmit signals to and receive signals from terminal devices 6 in the network 2.

It will be appreciated that only the components of the network node 8 required to explain the embodiments presented herein are illustrated in Figure 2.

It will be appreciated that where the network node 8 is implemented in the cloud, the processing unit 10, memory unit 12 and interface circuitry 14 illustrated in Figure 2 can be located in a single computer, server, or other network device, or be distributed across multiples computers, servers and/or other network devices.

Figure 3 is a block diagram of a terminal device 6 according to an embodiment that can be adapted or configured to operate according to one or more of the non-limiting example embodiments described.

The terminal device 6 comprises a processor or processing unit 18 that controls the operation of the terminal device 6. In some embodiments, the processing unit 18 can comprise one or more modules for implementing individual processing steps of the techniques described herein. The processing unit 18 is connected to a memory or memory unit 20 that contains or stores instructions or computer code executable by the processing unit 18 and other information or data required for the operation of the terminal device 6. The terminal device 6 comprises transceiver circuitry 22 (which comprises a receiver and a transmitter) with associated antenna(s) that can be used to transmit signals to and receive signals from radio access nodes 4 in the network 2.

It will be appreciated that only the components of the terminal device 6 required to explain the embodiments presented herein are illustrated in Figure 3.

In the communication network 2, in order for a terminal device 6 to successfully access the network via a radio access node 4, the terminal device 6 needs to know and apply the values of certain parameters that are applicable to that radio access node 4. This access by the terminal device 6 may be termed 'random access'. The parameters can relate to the time and/or frequency resources used for a physical channel that the terminal device 6 can use to transmit the access request, such as the times when a terminal device 6 can transmit a random access request/signal/preamble, the frequency or frequencies that should be used, and/or the transmit power to be used by the terminal device 6. The parameters can also or alternatively include information on the random access request/signal/preamble to be transmitted, for example the number of random access preambles, power ramping parameters, the length of a random access response window, etc. The parameters can be similar to the Physical Random Access Channel (PRACH) parameters contained in the PRACH-ConfigSIB information element (IE) in LTE, and/or the preamble information found in the RACH-ConfigCommon IE in LTE.

To reduce the amount of information that is regularly transmitted or broadcast by the radio access nodes 4 in the communication network 2 compared to, say, conventional LTE networks, the communication network 2 communicates the information required for a terminal device 6 to access the network 2 by the radio access nodes infrequently broadcasting a number of different sets of parameters/parameter values that can be used in the communication network 2, and (more) frequently broadcasting an index value that indicates to terminal devices 6 which set of parameters/parameter values is being used by that radio access node 4. The terminal devices 6 can then identify the set of parameters to use from the received index value, and apply the parameters when performing a random access request (or other type of access request) to access the communication network 2.

The sets of parameters/parameter values described above are also referred to herein as configuration parameters, parameter value configurations, parameter value combinations or System Information (SI).

As noted above, with this approach to communicating the parameters required for access to the network 2, there is a need for a way to provide for load control functionality that does not result in a substantial increase in the number of parameter sets in a network, or a substantial increase in the size of the index value used to indicate the set of parameters to be applied. Load control is provided to facilitate efficient resource utilization, for example by enabling a radio access node 4 to control or limit the number of terminal devices 6 that can access the network 2 (or alternatively the amount of data traffic) through the radio access node 4. Where load control is applied by a radio access node 4, this can mean that the radio access node 4 is applying load control to any terminal device 6 that wants to connect to the network 2 via the radio access node 4 (i.e. to any terminal device 6 in a radio coverage area of the radio access node 4), or to any terminal device 6 in a particular area, cell or sector in the radio coverage area of the radio access node 4.

Thus, in accordance with the present disclosure, to communicate information to terminal devices 6 on whether load control is being applied by a radio access node 4, one or more index values are defined as relating to the presence or application of load control by the radio access node 4 (in addition to the index values that correspond to the possible sets of parameter values), and the radio access node 4 can communicate that load control is being applied by broadcasting a signal with one of the index values indicating that load control is being applied. On receipt of this index value, the terminal device 6 will know that load control is being applied, and will search for, wait for and/or receive additional information relating to the load control (e.g. information that indicates how or to what terminal devices 6 the load control is being applied to).

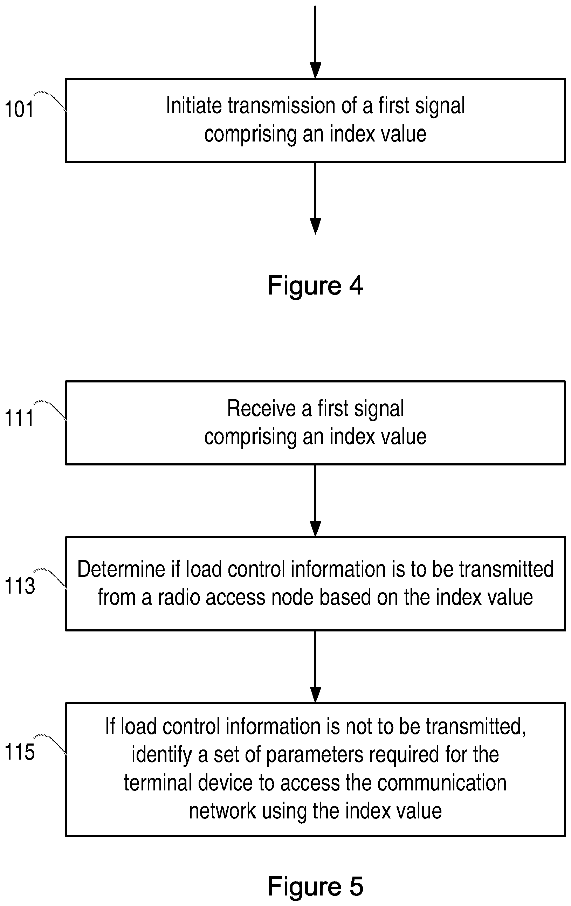

The flow chart in Figure 4 illustrates a method of operating a network node 8 according to an embodiment. Thus, in step 101, the network node 8 initiates transmission, from a radio access node 4 in the communication network 2, of a first signal comprising an index value. Where the network node 8 is separate from the radio access node 4, step 101 can comprise sending a suitable control signal from the network node 8 to the radio access node 4 to cause the transmission of the first signal by the transceiver circuitry of the radio access node 4. Where the network node 8 is the radio access node 4, step 101 can comprise the processing unit 10 sending a suitable control signal to the transceiver circuitry 16 to cause the transmission of the first signal.

If load control is not being applied by the radio access node 4 (i.e. there is no load control information to be transmitted or broadcast by the radio access node 4), for example if no restrictions are to be placed on the access of a terminal device 6 to the radio access node 4, then the index value in the first signal corresponds to a set of parameters required for the terminal device 6 to access the communication network 2.

However, if load control is being applied by the radio access node 4, then the index value in the first signal indicates that load control information is to be transmitted from the radio access node 4.

Figure 5 illustrates a corresponding method of operating a terminal device 6 according to an embodiment. In a first step, step 111, the terminal device 6 receives, from a radio access node 4 in a communication network 2, a first signal that comprises an index value. Next, in step 113, the terminal device 6 determines if load control information is to be transmitted from the radio access node 4 based on the index value. This step can comprise determining if the received index value is an index value that is used to indicate that load control information is to be transmitted. If it is determined from the index value that load control information is not to be transmitted from the radio access node 4, then the terminal device 6 identifies a set of parameters required for the terminal device 6 to access the communication network 2 that correspond to the index value (step 115).

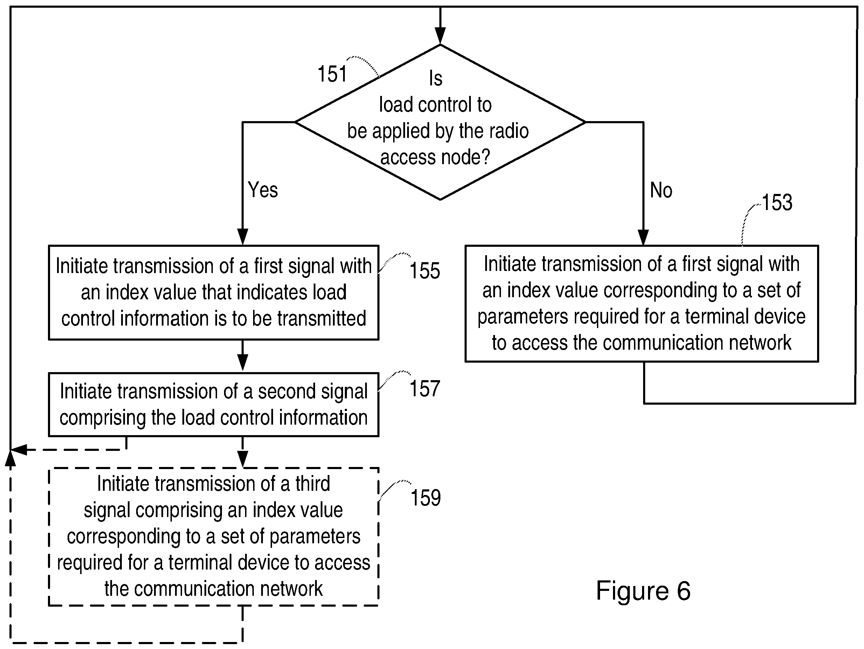

Figure 6 illustrates another method of operating a network node 8 according to an exemplary embodiment. Thus, in a first step, step 151, it is determined whether load control is to be applied by the radio access node 4. This step may comprise determining the load in the radio access node 4 or the load in a radio coverage area of the radio access node 4, and determining if the load exceeds a threshold. Those skilled in the art will be aware of various ways in which it can be determined whether load control is to be applied by a radio access node 4, and the present disclosure should not be limited to any particular type of determination. The result of the determination in step 151 decides the index value that is to be included in the first signal.

If load control is not being applied by the radio access node 4, the network node 8 initiates transmission of the first signal comprising an index value that corresponds to a set of parameters required for the terminal device 6 to access the communication network 2 (step 153). Step 153 is the same as step 101 described above. The specific set of parameters required for a radio access node 4 (and thus the index value used to signal that set of parameters) can be determined by the radio access node 4 or other control node in the network 2.

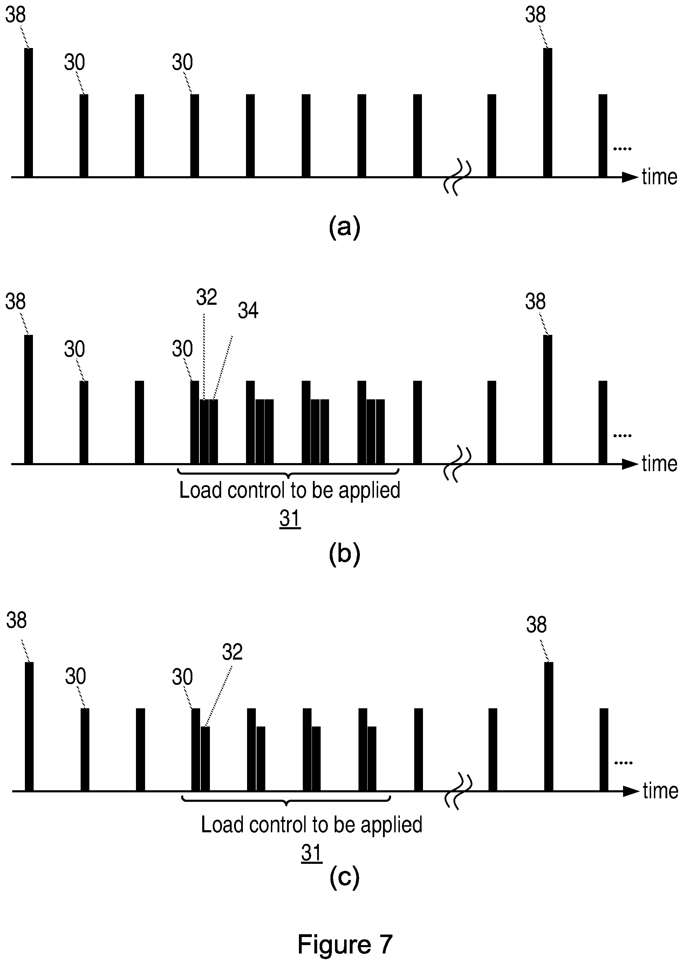

The first signal is preferably a signal that is transmitted or broadcast by the radio access node 4 periodically. For example the first signal can be transmitted every 100ms, although it will be appreciated that other periods can be used. It will also be appreciated that the index value included in the first signal will depend on whether load control is to be applied at the time that that instance of the first signal is to be transmitted or broadcast. Figure 7(a) illustrates the periodic transmission of a first signal 30.

After step 153, the method returns to step 151 for the next transmission of the first signal 30.

If load control is being applied by the radio access node 4, then the network node 8 initiates transmission of the first signal 30 comprising an index value that indicates that load control information is to be transmitted from the radio access node 4 (step 155). Step 155 corresponds to step 101 described above.

After step 155, as load control is being applied by the radio access node 4, the method can further comprises initiating transmission, from the radio access node 4, of a second signal comprising the load control information (step 157). As with the first signal, where the network node 8 is separate from the radio access node 4, this initiating transmission can comprise sending a suitable control signal from the network node 8 to the radio access node 4 to cause the transmission of the second signal by the transceiver circuitry of the radio access node 4. Likewise, where the network node 8 is the radio access node 4, initiating transmission of the second signal can comprise the processing unit 10 sending a suitable control signal to the transceiver circuitry 16 to cause the transmission of the second signal. This second signal can be transmitted or broadcast by the radio access node 4 shortly after the transmission or broadcast of the first signal (and in particular before the next transmission of the first signal in the embodiments where the first signal is transmitted periodically).

The transmission of the second signal 32 is shown in Figure 7(b) during a period 31 in which load control is being applied by the radio access node 4. The first signals 30 transmitted during this period 30 will include an index value indicating that load control is being applied. It can be seen that the second signals 32 are transmitted shortly after each first signal 30 during the period 31.

The load control information can comprise any information that can be set or used by terminal devices 6 to determine if access to the communication network 2 via the radio access node 4 is restricted, and/or the extent to which the access is restricted.

For example, the load control information can comprise an indication of one or more classes of terminal devices that load control is to be applied to. In this case each terminal device 6 may be assigned to one of a plurality of classes, and the load control information can indicate which one or more classes of terminal devices 6 that the load control is to be applied to. This class indication can be the same as or similar to the Access Class (AC) information used in Access Class Barring (ACB).

In another example, the load control information can indicate a control factor, which can be in the form of a threshold or probability that is used by a terminal device 6 to determine if access to the communication network 2 via the radio access node 4 is to be allowed or blocked. This control factor can be the same as or similar to the Access Class Barring Factor (ACBF) information used in Access Class Barring (ACB). The terminal device 6 can compare some value to the control factor to determine if access is allowed or blocked. The value can be, or be based in part on, a random number generated by the terminal device 6.

In another example, the load control information can indicate a blocking time, where the blocking time indicates the length of time or a range of times for which access to the communication network 2 via the radio access node 4 by a terminal device 6 is to be allowed or blocked.

In some embodiments, the load control information transmitted in the second signal 32 also includes an indication of the version of the load control information or an indication of whether the load control information has changed from a previous transmission of the load control information. This indication can be used by the terminal device 6 to determine whether it is necessary for the terminal device 6 to attempt to decode the rest of the second signal 32 that contains the load control information itself.

In some embodiments, if the first signal 30 comprises an index value that indicates load control information is to be transmitted from the radio access node 4, then, since the terminal device 6 has not been informed of the set of parameters to use to access the communication network 2, the method can further initiating transmission, from the radio access node 4, of a third signal comprising an index value that corresponds to a set of parameters required for the terminal device 6 to access the communication network 2 (step 159). This third signal 34 is shown in Figure 7(b), and can be transmitted or broadcast by the radio access node 4 shortly after the transmission or broadcast of the first signal 30 (and in particular before the next transmission of the first signal 30 in the embodiments where the first signal 30 is transmitted periodically). Although the third signal 34 is shown as being transmitted after the second signal 32, it will be appreciated that the third signal 34 may alternatively be transmitted before the second signal 32. This has the advantage that a terminal device 6 that is not affected by the load control applied by the radio access node 4 (e.g. it is not in a class of terminal devices 6 that the load control is applied to) can obtain the information on the set of parameters to use for accessing the communication network 2 more quickly.

In some embodiments, the third signal 34 may be transmitted on a different frequency and/or at a different time to the first signal 30. In this case, the third signal 34 can be transmitted at the same time as the second signal 32 but on a different frequency. This can allow a terminal device 6 that has previously received the load control information to receive the information in the third signal 34 more quickly.

In alternative embodiments, if load control is to be applied by the radio access node 4, the index value in the first signal 30 can be a value that indicates that load control information is to be transmitted from the radio access node 4 and that also indicates the set of parameters required for a terminal device 6 to access the communication network 2. This embodiment avoids the need to separately transmit the third signal described above. In this case, only the second signal comprising the load control information is transmitted after the first signal 30. This is shown in Figure 7(c) where second signal 32 is transmitted shortly after the first signal 30, and is represented in Figure 6 by step 159 shown in a dashed box and the arrow returning step 157 to step 151.

After step 157 or 159 as appropriate, the method returns to step 151 for the next transmission of the first signal 30.

In some embodiments, there may be a single index value that is preconfigured or defined as indicating that load control information is to be transmitted by the radio access node 4. In other embodiments, there may be a plurality of index values that are preconfigured or defined as indicating that load control information is to be transmitted by the radio access node 4, and one of the plurality of index values can be included in the first signal 30. These multiple index values can be used to indicate to the terminal device 6 whether the load control information has changed. For example, a first index value can be included in the first signal 30 for a first version of the load control information, and if/when the load control information changes, then the next transmission of the first signal 30 can include a different one of the plurality of index values to indicate to the terminal device 6 that load control is being applied and that the load control information has changed.

In some embodiments, the method can further comprise initiating transmission, from the radio access node 4, of an access information signal. The transmission of the access information signal is shown in Figure 7 as signal 38. This access information signal 38 indicates a plurality of sets of parameters required for a terminal device 6 to access the communication network 2, and respective index values for each of the plurality of sets. The index value included in the first signal 30 is selected to indicate the particular one of the plurality of sets of parameters that is being used by the radio access node 4. Where the first signal 30 is transmitted periodically, this access information signal 38 can also be transmitted periodically, but with a much longer period than the first signal 30. For example, where the first signal is transmitted every 100ms, the access information signal 38 can be transmitted every 10 seconds.

In some embodiments, the access information signal 38 can also indicate the index value(s) to be used to indicate that load control information is to be transmitted from the radio access node 4. This way the terminal device 6 will know which index value will be used to signal that load control is being applied. In alternative embodiments, the index value(s) to be used to indicate that load control information is to be transmitted can be defined in a standard or preconfigured in the radio access node 4 and the terminal device 6.

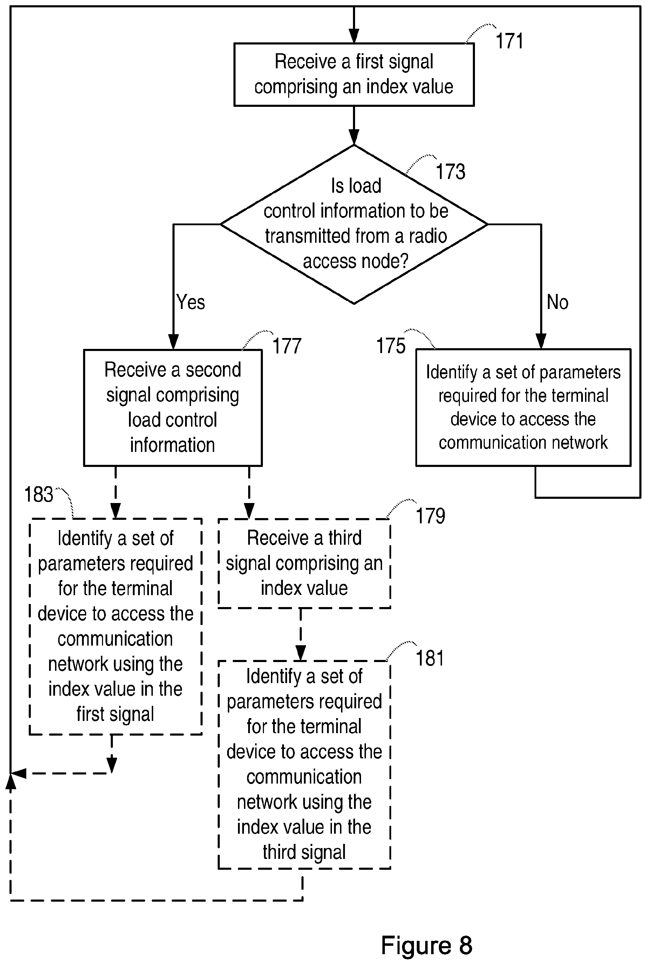

Figure 8 illustrates another method of operating a terminal device 6 according to an exemplary embodiment. Thus, in step 171 the terminal device 6 operates the transceiver circuitry 22 to receive a first signal 30 comprising an index value from a radio access node 4. Step 171 is similar to step 111 in Figure 5. In step 173, the terminal device 6 determines if load control information is to be transmitted from the radio access node 4 based on the index value. This step is similar to step 113, and it is determined if the received index value is an index value associated with the application of load control by the radio access node 4.

If it is determined that load control information is not to be transmitted from the radio access node 4, the terminal device 6 identifies a set of parameters required for the terminal device 6 to access the communication network 2 corresponding to the index value (step 175). That is, the terminal device 6 can look up the set of parameters associated with the index value in a table or database. After step 175 the method returns to step 171 to await the next reception of a first signal 30.

If at step 173 it is determined that load control information is to be transmitted from the radio access node 4, then the terminal device 6 operates the transceiver circuitry 22 to receive a second signal 32 comprising the load control information from the radio access node 4. The load control information in the second signal 32 can be as described above with reference to step 157.

Also as noted above, the load control information in the second signal 32 can comprise an indication of the version of the load control information or an indication of whether the load control information has changed from a previous transmission of the load control information. Although not shown in Figure 8, the terminal device 6 can examine the version indication or change indication to determine whether it is necessary for the terminal device 6 to decode and apply the load control information in the received second signal 32 (e.g. by comparing the version indication to a version indication associated with load control information already stored at the terminal device 6).

After receiving the second signal 32 in step 177, the method can, in some embodiments, further comprise receiving a third signal 34 comprising an index value that corresponds to a set of parameters required for the terminal device 6 to access the communication network 2 (step 179). On receipt of this third signal 34 the terminal device 6 identifies a set of parameters required for the terminal device 6 to access the communication network 2 corresponding to the index value (step 181). That is, the terminal device 6 can look up the set of parameters associated with the index value in a table or database. After step 181 the method returns to step 171 to await the next reception of a first signal 30.

In some embodiments, the third signal 34 can be received on a different frequency and/or at a different time to the first signal 30.

In some embodiments, the index value in the first signal 30 can be a value that indicates that load control information is to be transmitted from the radio access node 4 and that also indicates the set of parameters required for a terminal device 6 to access the communication network 2. Thus this embodiment avoids the need to separately transmit the third signal 34 described above. In this case, only the second signal 32 comprising the load control information is transmitted after the first signal 30. Therefore, in some embodiments, rather than receive a separate third signal 34, the terminal device 6 can identify a set of parameters required for the terminal device 6 to access the communication network 2 from the index value received in the first signal 30 (step 183). After step 183 the method can return to step 171 to await the next reception of the first signal 30.

The method can also comprise receiving an access information signal 38 that indicates or identifies the plurality of sets of parameters that might be required for a terminal device 6 to access the communication network 2 and respective index values for each of the plurality of sets. This signal 38 can be received periodically by the terminal device 6, but much less frequently than the first signal 30. In some embodiments, the access information signal 38 further indicates the index value(s) that can be used to indicate that load control information is to be transmitted from the radio access node 4. In other embodiments, the index value(s) that can be used to indicate that load control information is to be transmitted can be defined in a standard or otherwise preconfigured in the terminal device 6.

In some embodiments, the index value in the received first signal 30 that indicates that load control information is to be transmitted from the radio access node 4 is one of a plurality of available index values that can be used to indicate that load control information is to be transmitted from the radio access node 4. When load control is being applied, the radio access node 4 can select one of these index values to include in the first signal 30. If the load control information changes while load control is being applied, then the radio access node 4 can select a different one of these index values to include in the next (and subsequent) transmissions of the first signal 30 to indicate this change to the terminal device 6. Thus, the terminal device 6, on receiving a further first signal 30 from the radio access node 4 with an index value that indicates that load control is being applied, can compare the index value in the further first signal 30 to the index value received in the previous first signal 30 to determine if the load control information has changed. If the terminal device 6 determines that the load control information has changed, the terminal device 6 then receives a further second signal 32 that comprises the changed load control information.

In the following description, the techniques presented herein are described with reference to their application in the System Control Plane (SCP) concept mentioned above. It will be appreciated, however, that the specific details in the following description are not limited to use in the SCP concept, and they can be applied more generally to existing communication systems and other communication systems operating according to future 5G standards.

As described above, in the SCP concept all possible or plausible combinations or configurations of System Information, SI (which could generally be equivalent to some or all of the information contained in the Master Information Block (MIB), System Information Block 1 (SIB1) and System Information Block 2 (SIB2) in LTE) that can be used in a radio coverage area of a radio access node 4 (e.g. a cell), are transmitted or broadcast infrequently (e.g. at 10 second intervals), along with information identifying an index value that can be used to identify each configuration. There is also a more frequent transmission or broadcast of system signature indexes (SSIs), e.g. each 100 milliseconds (ms), within an area in which a given system information configuration is applied, with the SSI identifying the specific configuration of SI that is being applied.

The SSI corresponds to the first signal 30 described above, and specifically the index value contained in the first signal 30. The combinations or configurations of SI correspond to the above-described sets of parameters that are required for a terminal device to access the communication network 2.

The transmission of all of the possible combinations or configurations corresponds to the access information signal 38 described above, and is referred to as the Access Information Table (AIT) below. It will be appreciated that AIT refers to the information being transmitted in signal 38, as well as the information once it is stored or held in the terminal device 6 (e.g. in the memory unit 20).

As described above, the techniques described herein provide that the network indicates to the terminal devices 6 (UEs) that load control is being applied and that they should search for/wait for/receive additional information related to load control (which is also referred to herein as access barring) before trying to access the network with (previously) acquired system information. The above-described load control information is referred to below as barring information or ACB information (but it should be appreciated that the techniques are not limited to load information in the form of ACB information that is currently used in LTE).

There are two main embodiments for transmitting this indication:
In the first embodiment, a specific SSI could be allocated to indicate that the UE 6 should obtain additional barring/load control (e.g. Access Class Barring - ACB) information e.g. encoded in a new signal 32 coming after the SSI 30 and/or possibly after the AIT transmission 38. This allocated SSI could be configured or defined in the AIT or be hardcoded/reserved in the standards. When the ACB information is present after the specific SSI (e.g. in the above-described second signal 32), the "actual" SSI, i.e. the one pointing to an entry in the AIT, is transmitted after the ACB information. This solution allows flexible ACB information to be conveyed to the UE 6 when applicable. The AIT is not expanded compared to the SCP concept and no additional information is transmitted, except in scenarios when barring/load control is applied (e.g. in overload situations). Alternatively, the transmission of the "actual" SSI can be moved to transmission resources (e.g. time/frequency resources) that are preconfigured, so that a UE 6 which already has up to date barring information (e.g. determined based on a value tag) does not have to read the (full) barring information in order to find the "actual" SSI. In a variation of this embodiment there can be a dedicated set of SSIs that can be used to indicate that load control/barring is being applied, from which the SSI in the first signal 30 indicating presence of ACB information is selected.

In the second embodiment, the range of SSI values is divided into two parts: one part (range) that can be used for indicating the application or presence of barring (e.g. ACB) information, and one part (range) indicating absence of barring information (i.e. indicating that barring/load control is not being applied). Each entry (i.e. each access information configuration) in the AIT can then be associated with two SSIs: one from the range indicating the absence of barring information and one from the range indicating the presence of barring information. As in the first embodiment above, indicating the presence of barring information is thus optional and it is present only when the radio access node 4 is fully or partially barring access to the communication network 2, and the UE 6 knows from the SSI 30 whether it needs to wait for the additional ACB information 32 before it can access the network 2. In a variation of this embodiment, for each access information configuration, i.e. each AIT entry, there can be a number of SSIs associated therewith, and the SSI indicating the presence of ACB information can be selected from that set.

Thus the techniques described herein provide a way to incorporate a load control mechanism with the SCP concept in a manner that retains the flexibility and high granularity of the current LTE load control mechanism (ACB), while still not significantly adding to the size of the AIT or the range of the SSI. The proposed technique does not add any signalling overhead when barring is not being applied and very limited overhead when barring is applied.

Furthermore, the solution keeps the number of bits in the SSI limited and, at the same time, allows the SCP concept to support load control functionality in the limited areas/periods/situations where/when the functionality is needed, but without compromising the performance in terms of access latency in situations where the functionality is not needed (i.e. when no barring is applied).

The first embodiment described above is now discussed in more detail. Thus, a single SSI value is set aside, dedicated to indicate that the radio access node 4, or a radio coverage area 4 of the radio access node 4 is fully or partially barred. This SSI value indicates to the UE 6 that it has to acquire ACB information (i.e. this SSI value does not point to any particular SI configuration in the AIT). This SSI is denoted herein as the "Barring-SSI". Then the ACB information 32 is transmitted right after (or a short predetermined time after) this Barring-SSI (but it is not transmitted if any of the regular SSIs are transmitted). The ACB information 32 informs the UE 6 of the state of the barring and if it applies to the UE (which can be partially based on a random number generated by the UE 6), e.g. similar to the ACB information currently used in LTE. If the UE 6 determines that it is not affected by the barring and that it consequently is allowed to access the network 2, then the UE 6 reads a second SSI (in the above-described third signal 34) which is transmitted right after (or a predetermined time after) the ACB information 32. This second SSI is the "actual" SSI in the sense that it is the SSI that points to a record in the AIT 38. With this embodiment no additional bits are broadcast, unless the network is actually (partially or fully) barred and the SSI range is only extended by one value (likely meaning that no additional bits would have to be added to the SSI).

The barring information 32 may include a value tag (e.g. in the form of a version indication) to indicate whether the barring information has been changed. This value tag should preferably be transmitted in the beginning of the barring information, so that a UE 6 which has up to date barring information can stop reading the rest of the barring information as early as possible. In this case, the transmission of the "actual" SSI (the third signal 34) could be moved to preconfigured transmission resources (e.g. time/frequency resources), e.g. in relation to the transmission of the Barring-SSI 30. This allows a UE 6 which has up to date barring information to immediately know where to find the "actual" SSI. It will be appreciated that the "actual" SSI 34 may even be transmitted simultaneously with the Barring-SSI 30, but using other frequency resources.

The second embodiment described above is now discussed in more detail. In this embodiment the SSI range is divided into two parts: one part (range) indicating presence of barring information and one part (range) indicating absence of barring information. Each entry (i.e. each access information configuration) in the AIT 38 is associated with two SSIs: one from the range indicating absence of barring information and one from the range indicating presence of barring information. By switching between the two SSIs associated with one AIT entry, a radio access node 4 can indicate the presence or absence of barring information (i.e. the presence or absence of load control information) without changing the (other) access information configuration the SSI is associated with.

As in the first embodiment, the presence of barring information is thus optional and present only when access is fully or partially barred. Therefore when the UE 6 receives the SSI 30, it knows immediately from the range whether or not to expect and wait for the additional ACB information 32 before it can access the network 2. This should typically occur only in overloaded scenarios so that the UE 6 in most cases (non-overloaded scenarios) will not have to receive any ACB information 32.

The division of the SSI range into the two parts/ranges could be indicated in the AIT 38, either explicitly as a separate piece of information in the beginning of the AIT 38 or implicitly in the association of SSIs to AIT entries. Alternatively, the range division could be standardized (and thus hardcoded in the UE 6) or configured as part of the subscription information, i.e. stored in a subscriber identity module, e.g. a USIM.

In either of the above embodiments, the ACB information 32 is preferably transmitted immediately after the SSI 30. This would provide the ACB information 32 to the UE 6 as quickly as possible after the indication of its presence. In addition, this allows reliance on the synchronization properties of the SSI 30 for the reception of the ACB information 32 (although a demodulation reference signal (DMRS) may still be needed for the transmission of the ACB information).

A less preferred alternative is for the ACB information 32 to be transmitted further from the SSI 30, but still at a known time in relation to the SSI transmission 30 (and optionally using predetermined frequency resources). If the time between the SSI 30 and the ACB information 32 is too long, the ACB information 32 may have to be a self-contained signal, containing a reference signal with synchronization information in addition to the actual ACB information 32.

The ACB information 32 may also be included in a data container following the SSI 30, where small amounts of essential information, e.g. essential system information such as PLMN ID, may be transmitted.

The ACB information 32 may be transmitted (as described above) as regular control signalling information (e.g. in the form of ASN.1 encoded radio resource control (RRC) Information Elements). Alternatively, the above described transmission may refer to an index (e.g. with the same or similar format as the SSI) which points to a table record in a part of the AIT 38 which is provided for listing ACB/barring configurations. This latter alternative has the advantage that it provides a shorter ACB information transmission 32 (i.e. only an index is transmitted). However it has the disadvantage that the size of the AIT is increased and that a network operator has to populate the AIT 38 beforehand with all the ACB configurations that it potentially will want to use in the network 2.

In either of the embodiments described above, instead of a single Barring SSI (in the first embodiment) or a single Barring SSI per SI configuration in the AIT 38 (in the second embodiment) the single Barring-SSI is replaced by a set of equivalent Barring-SSIs (i.e. SSIs dedicated to indicate that ACB/barring information is present). In the first embodiment this means that there is a single such set of Barring-SSIs. In the second embodiment there is one set of Barring-SSIs per access information/SI configuration in the AIT 38.

When circumstances trigger the application of barring for a radio access node 4 and the radio access node 4 starts to transmit ACB/barring information, one of the SSIs in the relevant set of Barring-SSIs is selected as the Barring-SSI to be transmitted in the first signal 30. If the ACB/barring information is subsequently changed (e.g. to a more or less restrictive level), e.g. because the access load changes, the transmitted Barring-SSI 30 is replaced by another SSI in the concerned set of Barring-SSIs.

Changing the Barring-SSI when the ACB/barring information is changed allows a UE 6 to easily detect that ACB/barring information still applies, but that it needs to re-acquire the ACB/barring information, because it has changed. Note that there may not be any relation between a certain Barring-SSI in the set and specific ACB/barring information. In other words the Barring-SSIs in a set are equivalent in the sense that they all just indicate that ACB/barring information is present, but say nothing about the actual content of the ACB/barring information. It is the changing of the Barring-SSI that is significant and informs the UE 6 that the previous ACB/barring information has been replaced by new information.

In the first embodiment above, a radio access node 4 that is applying barring may inform its neighbours (i.e. neighbouring radio access nodes 4) of the state of the radio coverage area managed by the radio access node 4 (i.e. that barring is being applied and optionally what the current ACB/barring information is) and which Barring-SSI the radio access node 4 has selected. Neighbouring radio access nodes 4 may use this information to avoid selecting the same Barring-SSI for use in their transmissions of the first signal 30, in case they also need to apply barring (which may be likely since access load peaks may often be associated with local areas, e.g. sports arenas).

As yet another option, each Barring-SSI may be associated with information that aids the UE 6 in receiving/decoding the ACB/barring information, e.g. a scrambling sequence with which the ACB/barring information is scrambled when it is transmitted. This association between SSI and transmission information can be preconfigured, e.g. in a standard, or be defined in the AIT 38.

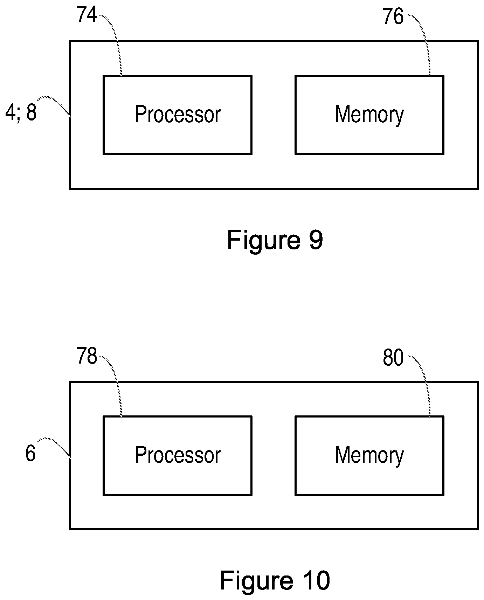

Figure 9 is a block diagram of an alternative network node 8 (which, as above, can be in or part of a radio access node 4 or be separate from a radio access node 4) that can be used in the example embodiments described herein. The network node 8 comprises a processor 74 and a memory 76. The memory 76 contains instructions executable by the processor 74, and on execution of those instructions, the network node 8 is operative to initiate transmission, from a radio access node 4 in the communication network 2, a first signal comprising an index value. If load control is not being applied by the radio access node 4, the index value corresponds to a set of parameters required for a terminal device 6 to access the communication network 2. If load control is being applied by the radio access node 4, the index value indicates that load control information is to be transmitted from the radio access node 4.

Figure 10 is a block diagram of an alternative terminal device 6 that can be used in the example embodiments described herein. The terminal device 6 comprises a processor 78 and a memory 80. The memory 80 contains instructions executable by the processor 78, and on execution of those instructions, the terminal device 6 is operative to: receive, from a radio access node 4 in the communication network 2, a first signal comprising an index value; determine if load control information is to be transmitted from the radio access node 4 based on the index value; and if it is determined that load control information is not to be transmitted from the radio access node 4, identify a set of parameters required for the terminal device to access the communication network corresponding to the index value.

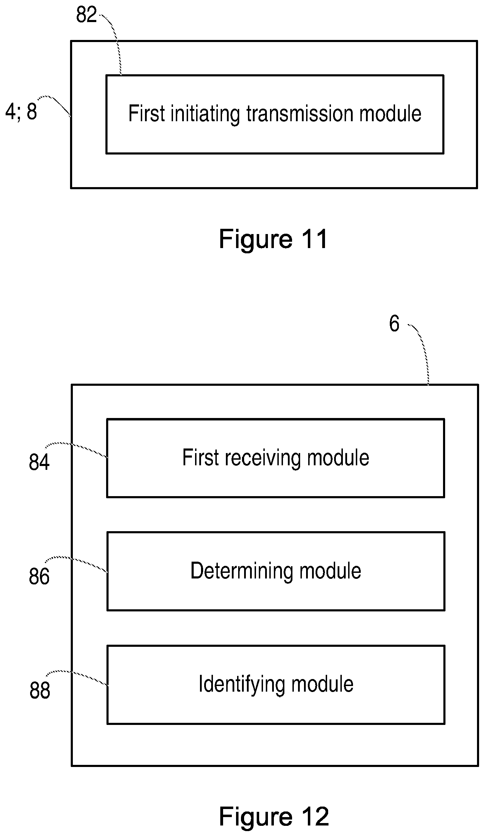

Figure 11 is a block diagram of another alternative network node 8 (which, as above, can be in or part of a radio access node 4 or be separate from a radio access node 4) that can be used in the example embodiments described herein. The network node 8 comprises a first initiating transmission module 82 that is configured to initiate transmission, from a radio access node 4 in the communication network 2, a first signal comprising an index value. If load control is not being applied by the radio access node 4, the index value corresponds to a set of parameters required for a terminal device 6 to access the communication network 2. If load control is being applied by the radio access node 4, the index value indicates that load control information is to be transmitted from the radio access node 4.

Figure 12 is a block diagram of another alternative terminal device 6 that can be used in the example embodiments described above. The terminal device 6 comprises a first receiving module 84 that is configured to receive, from a radio access node 4 in the communication network 2, a first signal comprising an index value; a determining module 86 configured to determine if load control information is to be transmitted from the radio access node 4 based on the index value; and an identifying module 88 configured to identify a set of parameters required for the terminal device to access the communication network corresponding to the index value if it is determined that load control information is not to be transmitted from the radio access node 4.

Therefore there is provided a technique for providing load control functionality in a network that does not frequently broadcast system information, and that combines flexibility and high granularity with low index and parameter value configuration overheads.

Modifications and other variants of the described embodiment(s) will come to mind to one skilled in the art having the benefit of the teachings presented in the foregoing descriptions and the associated drawings. Therefore, it is to be understood that the embodiment(s) is/are not to be limited to the specific examples disclosed and that modifications and other variants are intended to be included within the scope of this disclosure. Although specific terms may be employed herein, they are used in a generic and descriptive sense only and not for purposes of limitation.

## Claims

1. A method of operating a network node in a communication network, the method comprising:
initiating (101) transmission, from a radio access node in the communication network, of a first signal comprising an index value;
wherein, if load control is not being applied by the radio access node, the index value corresponds to a set of parameters required for a terminal device to access the communication network; and
wherein, if load control is being applied by the radio access node, the index value indicates that load control information is to be transmitted from the radio access node.

2. A method as defined in claim 1, wherein if the first signal comprises an index value that indicates that load control information is to be transmitted from the radio access node, the method further comprises the step of:
initiating (157) transmission, from the radio access node, of a second signal comprising the load control information.

3. A method as defined in claim 1 or 2, wherein the load control information comprises any one or more of:
an indication of one or more classes of terminal devices that load control is being applied to;
a control factor, wherein the control factor is a threshold or probability used by a terminal device to determine if access to the communication network via the radio access node is to be allowed or blocked; and
a blocking time, wherein the blocking time indicates the length of time or range of times for which access to the communication network via the radio access node by a terminal device is to be allowed or blocked.

4. A method as defined in claim 2 or 3, wherein the load control information comprises an indication of the version of the load control information or an indication of whether the load control information has changed from a previous transmission of the load control information.

5. A method as defined in any of claims 1-4, wherein if the first signal comprises an index value that indicates load control information is to be transmitted from the radio access node, the method further comprises the step of:
initiating (159) transmission, from the radio access node, of a third signal comprising an index value that corresponds to a set of parameters required for a terminal device to access the communication network.

6. A method as defined in claim 5, wherein the step of initiating transmission of the third signal comprises initiating transmission of the third signal on a different frequency and/or at a different time to the first signal.

7. A method as defined in any of claims 1-4, wherein if load control is to be applied by the radio access node, the index value in the first signal indicates that load control information is to be transmitted from the radio access node and indicates the set of parameters required for a terminal device to access the communication network.

8. A method of operating a terminal device, the method comprising:
receiving (111), from a radio access node in a communication network, a first signal comprising an index value;
determining (113) if load control information is to be transmitted from the radio access node based on the index value; and
if it is determined that load control information is not to be transmitted from the radio access node, identifying (115) a set of parameters required for the terminal device to access the communication network corresponding to the index value.

9. A method as defined in claim 8, wherein if it is determined that load control information is to be transmitted from the radio access node, the method further comprises the step of:
receiving (177), from the radio access node, a second signal comprising the load control information.

10. A method as defined in claim 9, wherein the load control information comprises any one or more of:
an indication of one or more classes of terminal devices that load control is to be applied to;
a control factor, wherein the control factor is a threshold or probability used by the terminal device to determine if access to the communication network via the radio access node is to be allowed or blocked; and
a blocking time, wherein the blocking time indicates the length of time or range of times for which access to the communication network via the radio access node by the terminal device is to be allowed or blocked.

11. A method as defined in claim 9 or 10, wherein the load control information comprises an indication of the version of the load control information or an indication of whether the load control information has changed from a previous transmission of the load control information.

12. A method as claimed in claim 8-11, wherein the index value in the received first signal that indicates that load control information is to be transmitted from the radio access node is selected from a plurality of available index values that can be used to indicate that load control information is to be transmitted from the radio access node, and wherein the method further comprises the steps of:
receiving, from the radio access node, a further first signal, the further first signal comprising an index value selected from the plurality of available index values; and
comparing the index value comprised in the received first signal to the index value comprised in the received further first signal to determine if the load control information has changed.

13. A method as claimed in claim 12, when dependent on any of claims 9-11, wherein the method further comprises the step of:
if it is determined that the load control information has changed, receiving, from the radio access node, a further second signal comprising the changed load control information.

14. A method as defined in any of claims 8-13, wherein if it is determined that load control information is to be transmitted from the radio access node, the method further comprises the step of:
receiving (179), from the radio access node, a third signal comprising an index value that corresponds to a set of parameters required for a terminal device to access the communication network.

15. A network node configured to perform the method according to any one of the claims 1-7.

16. A terminal device configured to perform the method according to any one of the claims 8-14.

## Patentansprüche

1. Verfahren zum Betreiben eines Netzwerkknotens in einem Kommunikationsnetzwerk, wobei das Verfahren umfasst:
Einleiten (101) der Übertragung eines ersten Signals, das einen Indexwert umfasst, von einem Funkzugangsknoten im Kommunikationsnetzwerk;
worin, wenn durch den Funkzugangsknoten keine Laststeuerung angewendet wird, der Indexwert einer Menge von Parametern entspricht, die für ein Endgerät erforderlich sind, um auf das Kommunikationsnetzwerk zuzugreifen; und
worin, wenn durch den Funkzugangsknoten Laststeuerung angewendet wird, der Indexwert angibt, dass Laststeuerungsinformation vom Funkzugangsknoten zu übertragen ist.

2. Verfahren nach Anspruch 1, worin, wenn das erste Signal einen Indexwert umfasst, der angibt, dass Laststeuerungsinformation vom Funkzugangsknoten zu übertragen ist, das Verfahren ferner den Schritt umfasst:
Einleiten (157) der Übertragung eines zweiten Signals vom Funkzugangsknoten, das die Laststeuerungsinformation umfasst.

3. Verfahren nach Anspruch 1 oder 2, worin die Laststeuerungsinformation eines oder mehr von Folgendem umfasst:
eine Angabe einer oder mehrerer Klassen von Endgeräten, auf die Laststeuerung angewendet wird;
einen Steuerungsfaktor, worin der Steuerungsfaktor ein Schwellenwert oder eine Wahrscheinlichkeit ist, der bzw. die durch ein Endgerät verwendet wird, um zu bestimmen, ob der Zugang zum Kommunikationsnetzwerk über den Funkzugangsknoten zu gestatten oder zu sperren ist; und
eine Sperrzeit, worin die Sperrzeit die Zeitdauer oder den Bereich von Zeiten angibt, für die bzw. den der Zugang zum Kommunikationsnetzwerk über den Funkzugangsknoten durch ein Endgerät zu gestatten oder zu sperren ist.

4. Verfahren nach Anspruch 2 oder 3, worin die Laststeuerungsinformation eine Angabe der Version der Laststeuerungsinformation oder eine Angabe darüber umfasst, ob die Laststeuerungsinformation sich gegenüber einer früheren Übertragung der Laststeuerungsinformation geändert hat.

5. Verfahren nach einem der Ansprüche 1 bis 4, worin, wenn das erste Signal einen Indexwert umfasst, der angibt, dass Laststeuerungsinformation vom Funkzugangsknoten zu übertragen ist, das Verfahren ferner den Schritt umfasst:
Einleiten (159) der Übertragung eines dritten Signals vom Funkzugangsknoten, das einen Indexwert umfasst, der einer Menge von Parametern entspricht, die für ein Endgerät erforderlich sind, um auf das Kommunikationsnetzwerk zuzugreifen.

6. Verfahren nach Anspruch 5, worin der Schritt des Einleitens der Übertragung des dritten Signals, das Einleiten der Übertragung des dritten Signals auf einer anderen Frequenz und/oder zu einem anderen Zeitpunkt als das erste Signal umfasst.

7. Verfahren nach einem der Ansprüche 1 bis 4, worin, wenn durch den Funkzugangsknoten Laststeuerung anzuwenden ist, der Indexwert im ersten Signal angibt, dass Laststeuerungsinformation vom Funkzugangsknoten zu übertragen ist, und die Menge von Parametern angibt, die für ein Endgerät erforderlich sind, um auf das Kommunikationsnetzwerk zuzugreifen.

8. Verfahren zum Betreiben eines Endgeräts, wobei das Verfahren umfasst:
Empfangen (111) eines ersten Signals, das einen Indexwert umfasst, von einem Funkzugangsknoten in einem Kommunikationsnetzwerk;
auf dem Indexwert beruhendes Bestimmen (113), ob Laststeuerungsinformation vom Funkzugangsknoten zu übertragen ist; und
wenn bestimmt wird, dass Laststeuerungsinformation vom Funkzugangsknoten nicht zu übertragen ist, Identifizieren (115) einer dem Indexwert entsprechenden Menge von Parametern, die für das Endgerät erforderlich sind, um auf das Kommunikationsnetzwerk zuzugreifen.

9. Verfahren nach Anspruch 8, worin, wenn bestimmt wird, dass Laststeuerungsinformation vom Funkzugangsknoten zu übertragen ist, das Verfahren ferner den Schritt umfasst:
Empfangen (177) eines zweiten Signals vom Funkzugangsknoten, das die Laststeuerungsinformation umfasst.

10. Verfahren nach Anspruch 9, worin die Laststeuerungsinformation eine oder mehrere der folgenden Komponenten umfasst:
eine Angabe einer oder mehrerer Klassen von Endgeräten, auf die Laststeuerung anzuwenden ist;
einen Steuerungsfaktor, worin der Steuerungsfaktor ein Schwellenwert oder eine Wahrscheinlichkeit ist, der bzw. die durch das Endgerät verwendet wird, um zu bestimmen, ob der Zugang zum Kommunikationsnetzwerk über den Funkzugangsknoten zu gestatten oder zu sperren ist; und
eine Sperrzeit, worin die Sperrzeit die Zeitdauer oder den Bereich von Zeiten angibt, für die bzw. den der Zugang zum Kommunikationsnetzwerk über den Funkzugangsknoten durch das Endgerät zu gestatten oder zu sperren ist.

11. Verfahren nach Anspruch 9 oder 10, worin die Laststeuerungsinformation eine Angabe der Version der Laststeuerungsinformation oder eine Angabe darüber umfasst, ob die Laststeuerungsinformation sich gegenüber einer früheren Übertragung der Laststeuerungsinformation geändert hat.

12. Verfahren nach Anspruch 8 bis 11, worin der Indexwert in dem empfangenen ersten Signal, das angibt, dass Laststeuerungsinformation vom Funkzugangsknoten zu übertragen ist, aus einer Vielzahl von verfügbaren Indexwerten ausgewählt wird, die verwendet werden können, um anzugeben, dass Laststeuerungsinformation vom Funkzugangsknoten zu übertragen ist, und worin das Verfahren ferner die folgenden Schritte umfasst:
Empfangen eines weiteren ersten Signals vom Funkzugangsknoten, wobei das weitere erste Signal einen Indexwert umfasst, der aus der Vielzahl von verfügbaren Indexwerte ausgewählt ist; und
Vergleichen des im empfangenen ersten Signal enthaltenen Indexwerts mit dem im empfangenen weiteren ersten Signal enthaltenen Indexwert, um zu bestimmen, ob sich die Laststeuerungsinformation geändert hat.

13. Verfahren nach Anspruch 12, wenn abhängig von einem der Ansprüche 9 bis 11, worin das Verfahren ferner den Schritt umfasst:
wenn bestimmt wird, dass sich die Laststeuerungsinformation geändert hat, Empfangen eines weiteren zweiten Signals vom Funkzugangsknoten, das die geänderte Laststeuerungsinformation umfasst.

14. Verfahren nach einem der Ansprüche 8 bis 13, worin, wenn bestimmt wird, dass Laststeuerungsinformation vom Funkzugangsknoten zu übertragen ist, das Verfahren ferner den Schritt umfasst:
Empfangen (179) eines dritten Signals vom Funkzugangsknoten, das einen Indexwert umfasst, der einer Menge von Parametern entspricht, die für ein Endgerät erforderlich sind, um auf das Kommunikationsnetzwerk zuzugreifen.

15. Netzwerkknoten, der dafür konfiguriert ist, das Verfahren nach einem der Ansprüche 1 bis 7 durchzuführen.

16. Endgerät, das dafür konfiguriert ist, das Verfahren nach einem der Ansprüche 8 bis 14 durchzuführen.

## Revendications

1. Procédé de fonctionnement d'un noeud de réseau dans un réseau de communication, le procédé comprenant :
l'initiation (101) d'une émission, depuis un noeud d'accès radio dans le réseau de communication, d'un premier signal qui comprend une valeur d'index ;
dans lequel, si une commande de charge n'est pas en cours d'application par le noeud d'accès radio, la valeur d'index correspond à un jeu de paramètres qui sont requis pour qu'un dispositif terminal accède au réseau de communication ; et
dans lequel, si une commande de charge est en cours d'application par le noeud d'accès radio, la valeur d'index indique qu'une information de commande de charge doit être émise depuis le noeud d'accès radio.

2. Procédé tel que défini selon la revendication 1, dans lequel, si le premier signal comprend une valeur d'index qui indique qu'une information de commande de charge doit être émise depuis le noeud d'accès radio, le procédé comprend en outre l'étape constituée par :
l'initiation (157) d'une émission, depuis le noeud d'accès radio, d'un deuxième signal qui comprend l'information de commande de charge.

3. Procédé tel que défini selon la revendication 1 ou 2, dans lequel l'information de commande de charge comprend un quelconque élément informationnel ou plusieurs quelconques éléments informationnels pris parmi :
une indication d'une ou de plusieurs classe(s) de dispositifs terminaux sur lesquels une commande de charge est en cours d'application ;
un facteur de commande, dans lequel le facteur de commande est un seuil ou une probabilité qui est utilisé(e) par un dispositif terminal de manière à ce qu'il détermine si un accès au réseau de communication via le noeud d'accès radio doit être autorisé ou bloqué ; et
un temps de blocage, dans lequel le temps de blocage indique la durée temporelle ou la plage de temps pendant laquelle un accès au réseau de communication via le noeud d'accès radio par un dispositif terminal doit être autorisé ou bloqué.

4. Procédé tel que défini selon la revendication 2 ou 3, dans lequel l'information de commande de charge comprend une indication de la version de l'information de commande de charge ou une indication de si oui ou non l'information de commande de charge a changé depuis une émission précédente de l'information de commande de charge.

5. Procédé tel que défini selon l'une quelconque des revendications 1 à 4, dans lequel, si le premier signal comprend une valeur d'index qui indique qu'une information de commande de charge doit être émise depuis le noeud d'accès radio, le procédé comprend en outre l'étape constituée par :
l'initiation (159) d'une émission, depuis le noeud d'accès radio, d'un troisième signal qui comprend une valeur d'index qui correspond à un jeu de paramètres qui sont requis pour qu'un dispositif terminal accède au réseau de communication.

6. Procédé tel que défini selon la revendication 5, dans lequel l'étape d'initiation d'une émission du troisième signal, comprend l'initiation de l'émission du troisième signal sur une fréquence différente et/ou à un instant différent par rapport au premier signal.

7. Procédé tel que défini selon l'une quelconque des revendications 1 à 4, dans lequel, si une commande de charge doit être appliquée par le noeud d'accès radio, la valeur d'index dans le premier signal indique qu'une information de commande de charge doit être émise depuis le noeud d'accès radio et indique le jeu de paramètres qui sont requis pour qu'un dispositif terminal accède au réseau de communication.

8. Procédé de fonctionnement d'un dispositif terminal, le procédé comprenant :
la réception (111), en provenance d'un noeud d'accès radio dans un réseau de communication, d'un premier signal qui comprend une valeur d'index ;
la détermination (113) de si une information de commande de charge doit être émise depuis le noeud d'accès radio sur la base de la valeur d'index ; et
s'il est déterminé qu'une information de commande de charge ne doit pas être émise depuis le noeud d'accès radio, l'identification (115) d'un jeu de paramètres qui sont requis pour que le dispositif terminal accède au réseau de communication qui correspond à la valeur d'index.

9. Procédé tel que défini selon la revendication 8, dans lequel, s'il est déterminé qu'une information de commande de charge doit être émise depuis le noeud d'accès radio, le procédé comprend en outre l'étape constituée par :
la réception (177), en provenance du noeud d'accès radio, d'un deuxième signal qui comprend l'information de commande de charge.

10. Procédé tel que défini selon la revendication 9, dans lequel l'information de commande de charge comprend un quelconque élément informationnel ou plusieurs quelconques éléments informationnels pris parmi :
une indication d'une ou de plusieurs classe(s) de dispositifs terminaux sur lesquels une commande de charge doit être appliquée ;
un facteur de commande, dans lequel le facteur de commande est un seuil ou une probabilité qui est utilisé(e) par le dispositif terminal de manière à ce qu'il détermine si un accès au réseau de communication via le noeud d'accès radio doit être autorisé ou bloqué ; et
un temps de blocage, dans lequel le temps de blocage indique la durée temporelle ou la plage de temps pendant laquelle un accès au réseau de communication via le noeud d'accès radio par le dispositif terminal doit être autorisé ou bloqué.

11. Procédé tel que défini selon la revendication 9 ou 10, dans lequel l'information de commande de charge comprend une indication de la version de l'information de commande de charge ou une indication de si oui ou non l'information de commande de charge a changé depuis une émission précédente de l'information de commande de charge.

12. Procédé tel que revendiqué selon les revendications 8 à 11, dans lequel la valeur d'index dans le premier signal reçu qui indique qu'une information de commande de charge doit être émise depuis le noeud d'accès radio, est sélectionnée parmi une pluralité de valeurs d'index disponibles qui peuvent être utilisées de manière à indiquer qu'une information de commande de charge doit être émise depuis le noeud d'accès radio, et dans lequel le procédé comprend en outre les étapes constituées par :
la réception, en provenance du noeud d'accès radio, d'un autre premier signal, l'autre premier signal comprenant une valeur d'index qui est sélectionnée parmi la pluralité de valeurs d'index disponibles ; et
la comparaison de la valeur d'index qui est comprise dans le premier signal reçu avec la valeur d'index qui est comprise dans l'autre premier signal reçu de manière à déterminer si l'information de commande de charge a changé.

13. Procédé tel que revendiqué selon la revendication 12, lorsqu'elle dépend de l'une quelconque des revendications 9 à 11, dans lequel le procédé comprend en outre l'étape constituée par :
s'il est déterminé que l'information de commande de charge a changé, la réception, en provenance du noeud d'accès radio, d'un autre deuxième signal qui comprend l'information de commande de charge qui a changé.

14. Procédé tel que défini selon l'une quelconque des revendications 8 à 13, dans lequel, s'il est déterminé qu'une information de commande de charge doit être émise depuis le noeud d'accès radio, le procédé comprend en outre l'étape constituée par :
la réception (179), en provenance du noeud d'accès radio, d'un troisième signal qui comprend une valeur d'index qui correspond à un jeu de paramètres qui sont requis pour qu'un dispositif terminal accède au réseau de communication.

15. Noeud de réseau configuré de manière à ce qu'il réalise le procédé selon l'une quelconque des revendications 1 à 7.

16. Dispositif terminal configuré de manière à ce qu'il réalise le procédé selon l'une quelconque des revendications 8 à 14.
